# EUROPÄISCHE PATENTSCHRIFT

(11) **EP 3 091 306 B1**
(45) Veröffentlichungstag und Bekanntmachung des Hinweises auf die Patenterteilung: **30.09.2020**
(21) Anmeldenummer: 16165979.2
(22) Anmeldetag: 19.04.2016
(51) Int. Cl.: F24H 9/14, F24H 9/02

(54) **FAHRZEUGHEIZGERÄT**
VEHICLE HEATING DEVICE
CHAUFFAGE POUR VEHICULE

(30) Priorität: 29.04.2015 DE 102015106600
(43) Veröffentlichungstag der Anmeldung: 09.11.2016
(73) Patentinhaber: Eberspächer Climate Control Systems GmbH & Co. KG, 73730 Esslingen (DE)
(72) Erfinder: Haefner, Michael, 70469 Stuttgart (DE); Collmer, Andreas, 73773 Aichwald (DE); Eppler, Hermann, 72336 Balingen (DE)
(74) Vertreter: Ruttensperger Lachnit Trossin Gomoll

(56) Entgegenhaltungen:
- DE-A1- 10 058 794
- DE-A1-102005 053 514
- DE-A1-102013 102 358
- DE-B3-102013 002 046
- US-A- 5 096 325
- US-C2- E24 065

## Beschreibung

Die vorliegende Erfindung betrifft ein Fahrzeugheizgerät, welches beispielsweise dazu genutzt werden kann, die in einen Fahrzeuginnenraum einzuleitende Luft zu erwärmen.

Die DE 20 2004 015 442 U1 zeigt ein Luftheizgerät für ein Fahrzeug, bei welchem eine Wärmetauscherbaugruppe mit einer Gebläsebaugruppe im Bereich einander gegenüber liegender Dichtflächen verbunden ist. Die Wärmetauscherbaugruppe umfasst ein Wärmetauschergehäuse, das beispielsweise aus Metallgussmaterial aufgebaut ist. Das Wärmetauschergehäuse weist einen Brennkammerbaugruppenaufnahmeraum auf, in welchem eine mit Verbrennungsluft und Brennstoff zu speisende Brennkammerbaugruppe aufgenommen werden kann. Die bei der Verbrennung in der Brennkammerbaugruppe entstehenden Verbrennungsabgase strömen in einen auf den Brennkammerbaugruppenaufnahmeraum folgenden Wärmetauscherbereich, welcher zur verbesserten Wärmeübertragung sowohl an seiner Innenseite zur thermischen Wechselwirkung mit den Verbrennungsabgasen, als auch an seiner Außenseite zur thermischen Wechselwirkung mit der zu erwärmenden Luft die Wärmeübertragungsoberfläche vergrößernde Wärmeübertragungsrippen aufweist.

Die Gebläsebaugruppe umfasst ein Gebläsegehäuse, das an seiner von der Wärmetauscherbaugruppe abgewandten Seite einen Gebläsemotor trägt bzw. aufnimmt und an seiner der Wärmetauscherbaugruppe zugewandten Seite einen in Richtung einer Drehachse eines Förderrads offenen, die Drehachse des Förderrads ringartig umgebenden Förderkanal aufweist. Das Förderrad überdeckt den Förderkanal und liegt im Wesentlichen in dem auch die Brennkammerbaugruppe aufnehmenden Brennkammerbaugruppenaufnahmeraum des Wärmetauschergehäuses. Die nach Art eines Seitenkanalgebläses aufgebaute Gebläsebaugruppe fördert die zur Verbrennung erforderliche Luft in den Brennkammerbaugruppenaufnahmeraum und somit in Richtung zur Brennkammerbaugruppe.

Zur Erzeugung eines dichten Anschlusses der Gebläsebaugruppe an die Wärmetauscherbaugruppe liegen Dichtflächen dieser Baugruppen einander unter Zwischenlagerung eines Dichtelements gegenüber. Durch eine Mehrzahl von das Gebläsegehäuse mit dem Wärmetauschergehäuse verbindenden Schraubbolzen sind diese beiden Gehäuse unter Zwischenlagerung des Dichtelements gegeneinander verspannt. In dem Bereich zwischen der Gebläsebaugruppe und der Wärmetauscherbaugruppe werden im Allgemeinen dünne Dichtelemente aus vergleichsweise hartem Material, wie zum Beispiel gummibeschichtete Metalldichtungen, eingesetzt. Da bei der Gebläsebaugruppe das Förderrad mit sehr geringem Abstand über dem den Förderkanal aufweisenden Gebläsegehäuse positioniert ist, ist es erforderlich, das Gebläsegehäuse mit hoher Präzision zu fertigen. Um zu vermeiden, dass beim Zusammenbau des Gebläsegehäuses mit dem Wärmetauschergehäuse unter Zwischenlagerung des Dichtelements eine Verformung des beispielsweise aus Aluminiummaterial aufgebauten Gebläsegehäuses erzeugt wird, müssen auch die beiden unter Zwischenlagerung des Dichtelements einander gegenüberliegend positionierten und aufeinander zu gepressten Dichtflächen mit entsprechend hoher Präzision bereitgestellt werden. Dies wird im Allgemeinen dadurch erreicht, dass das Gebläsegehäuse in seinem von dem Förderrad überdeckten Bereich und im Bereich der daran vorgesehenen Dichtfläche und das Wärmetauschergehäuse im Bereich der daran vorgesehenen Dichtfläche einer spanabhebenden Nachbearbeitung unterzogen werden.

Ein Fahrzeugheizgerät gemäß dem Oberbegriff des Anspruchs 1 ist aus der DE 10 2005 053 514 A1 bekannt. Bei diesem bekannten Fahrzeugheizgerät liegt die Gebläsebaugruppe mit ihrer zweiten Dichtfläche direkt an der ersten Dichtfläche der Wärmetauscherbaugruppe an.

Es ist die Aufgabe der vorliegenden Erfindung, ein Fahrzeugheizgerät vorzusehen, welches bei einfachem Aufbau einen dichten Anschluss einer Gebläsebaugruppe an eine Wärmetauscherbaugruppe aufweist.

Erfindungsgemäß wird diese Aufgabe gelöst durch ein Fahrzeugheizgerät gemäß Anspruch 1. Dieses Fahrzeugheizgerät umfasst eine Wärmetauscherbaugruppe und eine Gebläsebaugruppe, wobei die Wärmetauscherbaugruppe eine erste Dichtfläche aufweist und die Gebläsebaugruppe eine durch eine Distanzhalteranordnung der ersten Dichtfläche in vorbestimmtem Abstand gegenüberliegend positionierte zweite Dichtfläche aufweist, ferner umfassend ein zwischen der ersten Dichtfläche und der zweiten Dichtfläche eingespanntes Dichtelement.

Bei dem erfindungsgemäßen Aufbau wird durch das Vorsehen der zusätzlich zu dem Dichtelement bereitgestellten Distanzhalteranordnung dafür gesorgt, dass, unabhängig von der Ausgestaltung des Dichtelements die Dichtflächen an der Gebläsebaugruppe und der Wärmetauscherbaugruppe immer in definiertem Abstand zueinander liegen. Dies sorgt einerseits dafür, dass ein dazwischen positioniertes Dichtelement mit definierter Belastung beaufschlagt wird. Andererseits kann auf eine hohe Präzision bei der Fertigung der Dichtflächen verzichtet werden, da nicht mehr die Dichtflächen unter Zwischenlagerung eines harten Dichtelements vollflächig gegeneinander gepresst werden, sondern die Distanzhalteranordnung die Relativlage der Gebläsebaugruppe bezüglich der Wärmetauscherbaugruppe definiert, ohne dass dadurch die Gefahr einer Verformung insbesondere im Bereich der Gebläsebaugruppe besteht.

Da im Allgemeinen die Wärmetauscherbaugruppe und die Gebläsebaugruppe mit jeweiligen Stirnseiten einander gegenüberliegend positioniert werden, wird weiter vorgeschlagen, dass die erste Dichtfläche an einer Stirnseite eines Wärmetauschergehäuses der Wärmetauscherbaugruppe vorgesehen ist, und dass die zweite Dichtfläche an einer Stirnseite der Gebläsebaugruppe vorgesehen ist.

Um den Raumbereich, in welchen die durch die Gebläsebaugruppe zu fördernde Luft einströmt, nach außen hin vollständig dicht abschließen zu können, sind die erste Dichtfläche, die zweite Dichtfläche und das Dichtelement ringartig ausgebildet.

Insbesondere dann, wenn die Wärmetauscherbaugruppe bzw. die Gebläsebaugruppe mit jeweiligen Gehäusen aus Metallgussmaterial gefertigt werden, ist gemäß einem weiteren vorteilhaften Aspekt vorgesehen, dass die Distanzhalteranordnung an der Wärmetauscherbaugruppe oder/und der Gebläsebaugruppe, vorzugsweise nur an der Wärmetauscherbaugruppe, eine Mehrzahl von, vorzugsweise drei, über die daran vorgesehene Dichtfläche vorspringenden Distanzhaltervorsprüngen umfasst. Die Distanzhaltervorsprünge können dabei als integrale Bestandteile der jeweiligen Baugruppe bereitgestellt werden. Alternativ ist auch das Eingliedern von als separate Bauteile bereitgestellten Distanzhaltervorsprüngen möglich. Das Vorsehen von drei Distanzhaltervorsprünge hat den wesentlichen Vorteil, dass dadurch einerseits eine über den Umfang verteilte, feste Verbindung zwischen der Gebläsebaugruppe und der Wärmetauscherbaugruppe erzeugt werden kann. Andererseits wird durch das Bereitstellen von drei gegenseitigen Berührungspunkten die Gefahr einer Verformung insbesondere der Gebläsebaugruppe vermieden.

Zur festen Verbindung der Gebläsebaugruppe mit der Wärmetauscherbaugruppe wird vorgeschlagen, dass im Bereich wenigstens eines, vorzugsweise jedes Distanzhaltervorsprungs eine Befestigungsorganeingriffsöffnung zum Eingriff eines die Gebläsebaugruppe an der Wärmetauscherbaugruppe festlegenden Befestigungsorgans vorgesehen ist.

Insbesondere dann, wenn die Distanzhaltervorsprünge an der Wärmetauscherbaugruppe vorgesehen sind, kann eine das Dichtelement in definierter Weise belastende Relativlage der beiden Dichtflächen bezüglich einander bei einfachem Aufbau dadurch erreicht werden, dass die Gebläsebaugruppe eine die zweite Dichtfläche und für jeden Distanzhaltervorsprung eine Anlagefläche bereitstellende Dicht/Anlage-Stirnfläche aufweist.

Um beim Zusammenbau der Gebläsebaugruppe mit der Wärmetauscherbaugruppe eine definierte Positionierung des Dichtelements vorgeben zu können, wird vorgeschlagen, dass an der Wärmetauscherbaugruppe oder/und der Gebläsebaugruppe eine Dichtelement-Lagepositionierungsformation vorgesehen ist. Dabei kann beispielsweise die Dichtelement-Lagepositionierungsformation an der Wärmetauscherbaugruppe oder/und der Gebläsebaugruppe, vorzugsweise nur der Wärmetauscherbaugruppe, wenigstens einen über die daran vorgesehene Dichtfläche vorspringenden Positioniervorsprung zum Eingriff in eine Positionieröffnung des Dichtelements umfassen.

Um eine zuverlässige Halterung des Dichtelements zu gewährleisten, wird vorgeschlagen, dass eine Vorsprungslänge der Distanzhaltervorsprünge kleiner ist, als eine Vorsprungslänge des wenigstens einen Positioniervorsprungs.

Die erste Dichtfläche kann an einer einen Brennkammerbaugruppenaufnahmeraum umgrenzenden Wandung der Wärmetauscherbaugruppe vorgesehen sein.

Bei einer vorteilhaften Ausgestaltungsform des erfindungsgemäßen Fahrzeugheizgeräts kann die Gebläsebaugruppe als Seitenkanalgebläse ausgebildet sein. Dabei ist erfindungsgemäß die zweite Dichtfläche einen ringartigen Luftförderkanal der Gebläsebaugruppe umgebend vorgesehen. Der Luftförderkanal kann vorzugsweise an einer zur zweiten Dichtfläche axial versetzten Förderkanal-Stirnfläche der Brennkammerbaugruppe in Richtung einer Drehachse eines dem Förderkanal axial gegenüberliegenden Förderrads offen sein.

Die vorliegende Erfindung wird nachfolgend mit Bezug auf die beiliegenden Figuren detailliert beschrieben. Es zeigt:
- Fig. 1: eine perspektivische Ansicht eines Wärmetauschergehäuses einer Wärmetauscherbaugruppe;
- Fig.2: eine der Fig. 1 entsprechende Ansicht des Wärmetauschergehäuses mit einem an einer Dichtfläche desselben positionierten Dichtelement;
- Fig.3: eine Stirnansicht des Wärmetauschergehäuses der Fig. 1;
- Fig.4: eine Schnittansicht des mit einer Gebläsebaugruppe verbundenen Bereichs des Wärmetauschergehäuses der Fig. 1, geschnitten längs einer Linie IV-IV in Fig. 3;
- Fig. 5: eine der Figur 4 entsprechende Schnittansicht, geschnitten längs einer Linie V-V in Fig. 3;
- Fig. 6: das im Kreis VI in Fig. 4 eingefasste Detail vergrößert.

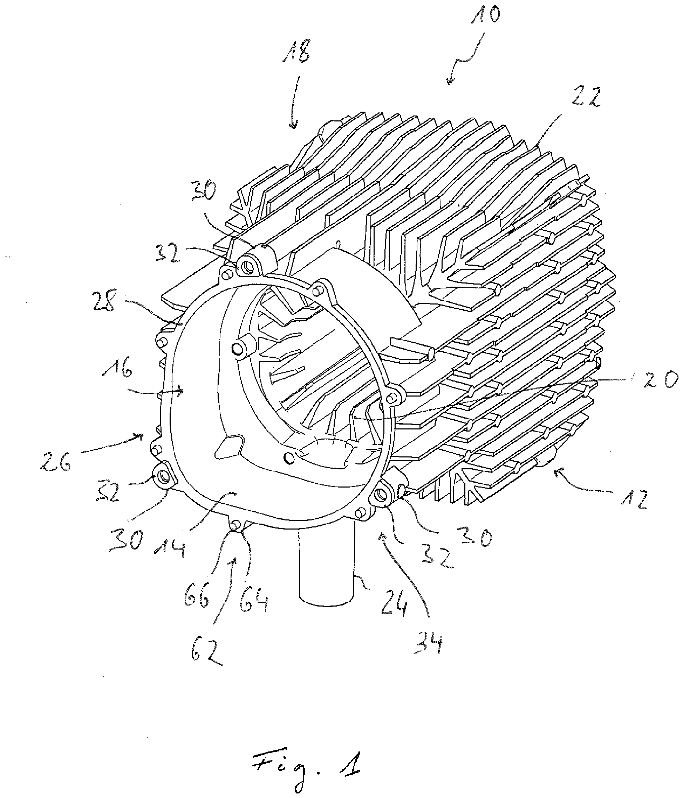

Die Fig. 1 zeigt eine Wärmetauscherbaugruppe 10, die beispielsweise bei einem Fahrzeugheizgerät zur Erwärmung von in einen Fahrzeuginnenraum einzuleitender Luft eingesetzt werden kann, wie es aus der DE 20 2004 015 442 U1 bekannt ist. Die Wärmetauscherbaugruppe 10 umfasst ein im Allgemeinen aus Metallgussmaterial aufgebautes Wärmetauschergehäuse 12, das in einem Endbereich mit einer im Wesentlichen zylindrischen Umfangswandung 14 einen Brennkammerbaugruppenaufnahmeraum 16 umgrenzt. In einem Wärmetauscherbereich 18 ist das Wärmetauschergehäuse 12 an seiner Innenseite mit einer Mehrzahl von ersten Wärmeübertragungsrippen 20 ausgebildet, um die in Verbrennungsabgasen transportierte Wärme auf das Wärmetauschergehäuse 12 zu übertragen. An seiner Außenseite ist das Wärmetauschergehäuse 12 insbesondere im Wärmetauscherbereich 18 mit einer Mehrzahl von zweiten Wärmeübertragungsrippen 22 aufgebaut, um die im Wärmetauschergehäuse 12 aufgenommene Wärme auf die dieses umströmende Luft zu übertragen. Im Bereich eines Abgasauslassstutzens 24 verlassen die in einer Brennkammerbaugruppe generierten Verbrennungsabgase den Innenraum des Wärmetauschergehäuses 12.

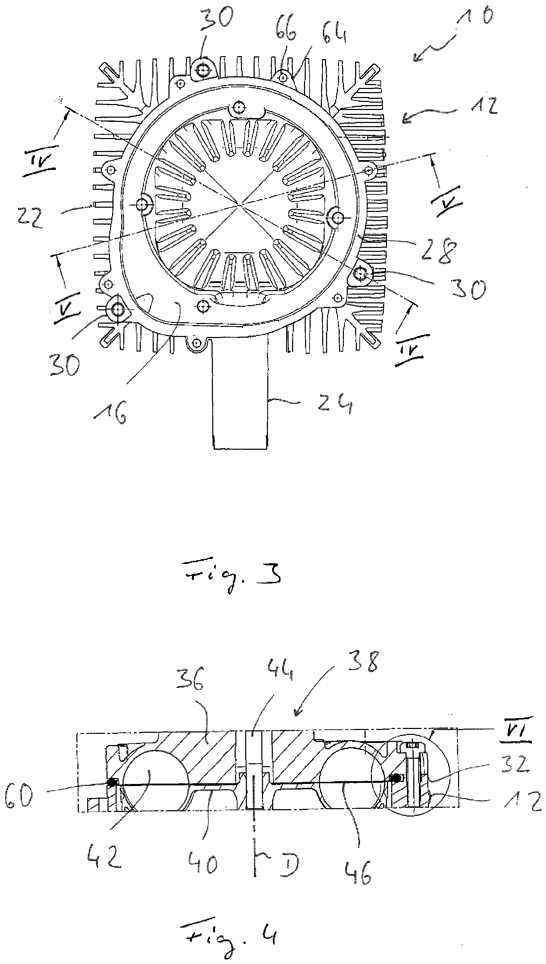

An einer beispielsweise im Bereich der Umfangswandung 14 bereitgestellten Stirnseite 26 weist das Wärmetauschergehäuse 12 eine ringartig ausgebildete erste Dichtfläche 28 auf. Außerhalb dieser ringartigen ersten Dichtfläche 28 sind mit im Wesentlichen gleichem Umfangsabstand drei Distanzhalter/Befestigungsansätze 30 z.B. als integrale Bestandteile des Wärmetauschergehäuses 12 vorgesehen. Jeder dieser Distanzhalter/Befestigungsansätze 30 weist im Wesentlichen außerhalb der ersten Dichtfläche 28 einen über die erste Dichtfläche 28 hervorstehenden Distanzhaltervorsprung 32 auf. Die Distanzhaltervorsprünge 32 der drei Distanzhalter/Befestigungsansätze 30 bilden zusammen eine Distanzhalteranordnung 34, durch welche das Wärmetauschergehäuse 12 und ein in den Fig. 4-6 erkennbares Gebläsegehäuse 36 einer allgemein mit 38 bezeichneten Gebläsebaugruppe in definiertem Abstand zueinander gehalten sind. Die grundsätzlich nach Art eines Seitenkanalgebläses aufgebaute Gebläsebaugruppe 38 weist in dem Gebläsegehäuse 36 einen in Richtung einer Drehachse D eines Förderrads 40 offenen, die Drehachse D ringartig umgebenden Förderkanal 42 auf. Das an einer Motorwelle 44 eines nicht dargestellten Gebläsemotors zur Drehung um die Drehachse D getragene Förderrad 40 liegt dem Gebläsegehäuse 36 an einer Stirnseite 45 des Gebläsegehäuses 36 im Bereich einer Förderkanal-Stirnfläche 46 mit geringem Abstand axial gegenüber. Radial außerhalb der aufgrund des erforderlichen geringen Abstands des Förderrads 40 mit hoher Präzision, beispielsweise durch spanabhebende Nachbearbeitung, bereitgestellten Förderkanal-Stirnfläche 46 liegt in axialer Richtung von der Wärmetauscherbaugruppe 10 zurückversetzt eine Dicht/Anlage-Stirnfläche 48, welche in ihrem dem Förderkanal 42 nahen, radial inneren Bereich eine zweite Dichtfläche 50 bereitstellt. An den Distanzhaltervorsprüngen 32 entsprechenden Umfangspositionen stellen die Dicht/Anlage-Stirnflächen 48 radial außerhalb der zweiten Dichtfläche 50 und auf demselben axialen Niveau Anlageflächen 52 bereit, an welchen im Zusammenbauzustand die Distanzhaltervorsprünge 32 anliegen.

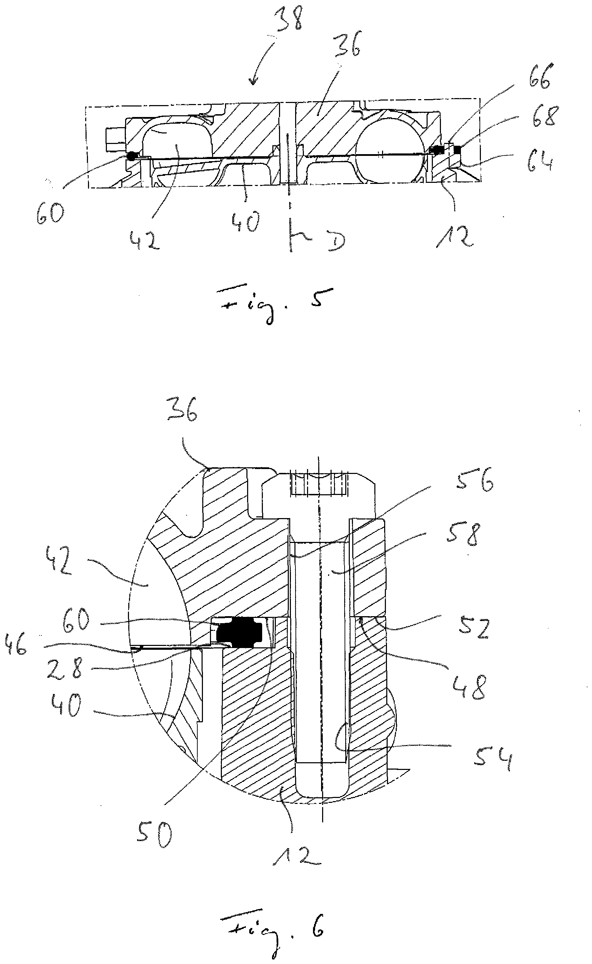

Um einen festen Zusammenhalt des Wärmetauschergehäuses 12 mit dem Gebläsegehäuse 36 zu erhalten, sind in den Distanzhalter/Befestigungsansätzen 30 Befestigungsorganeingriffsöffnungen 54, beispielsweise Innengewindeöffnungen, vorgesehen. Im Bereich der Anlageflächen 52 sind am Gebläsegehäuse 36 Durchgriffsöffnungen 56 vorgesehen, durch welche hindurch Befestigungsorgane 58, beispielsweise Schraubbolzen, geführt und in die Befestigungsorganeingriffsöffnungen 54 im Wärmetauschergehäuse 12 eingreifend positioniert werden können, also beispielsweise eingeschraubt werden können. In dem in Fig. 6 vergrößert dargestellten Zusammenbauzustand liegen die erste Dichtfläche 28 und die zweite Dichtfläche 50 einander mit definiertem Axialabstand gegenüber, wobei dieser Axialabstand der Vorsprungslänge der Distanzhaltervorsprünge 32 über die erste Dichtfläche 28 entspricht.

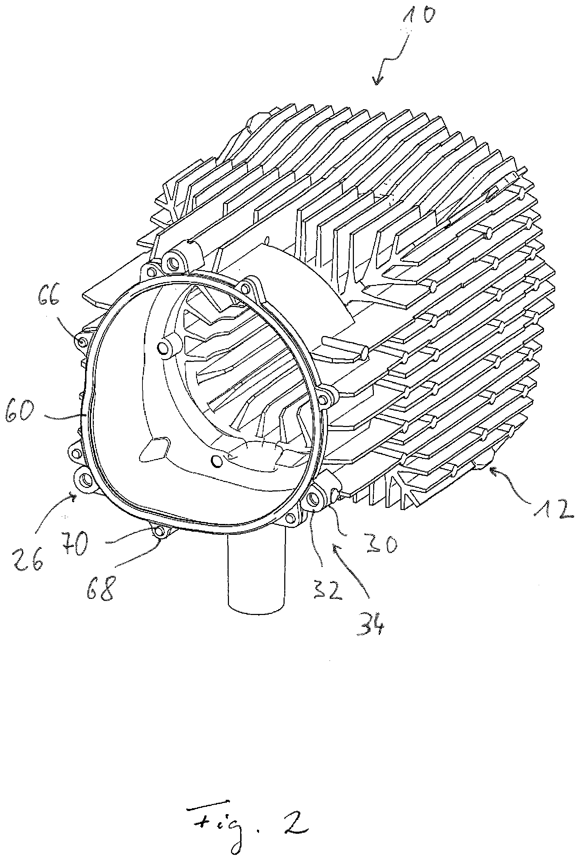

In dem zwischen den axial sich gegenüberliegenden Dichtflächen 28,50 gebildeten Zwischenraum ist ein an die ringartige Gestalt der Dichtflächen 28,50 angepasstes, ringartig ausgebildetes Dichtelement 60 positioniert. Das in Fig. 2 in Anlage an der ersten Dichtfläche 28 des Wärmetauschergehäuses 12 dargestellte Dichtelement 60 ist so dimensioniert, dass es einerseits den axialen Zwischenraum zwischen den beiden Dichtflächen 28,50 ausfüllt, andererseits zwischen diesen beiden Dichtflächen 28,50 zum Bereitstellen eines dichten Abschlusses zusammengedrückt wird. Das Dichtelement 60 kann im Querschnitt so aufgebaut sein, dass es einen beispielsweise rechteckigen Zentralbereich aufweist, an dem axial beidseits beispielsweise halbkreisartige Erhebungsbereiche vorstehen, die an der ersten Dichtfläche 28 bzw. der zweiten Dichtfläche 50 anliegen und durch die axiale Belastung verformt werden. Durch diese Querschnittsgeometrie des Dichtelements 60 ist sichergestellt, dass dieses einerseits durch definierte Anlagewechselwirkung mit den Dichtflächen 28,50 einen dichten Abschluss erzeugt, andererseits insbesondere dort, wo es nach radial außen nicht abgestützt oder abstützbar ist, zwischen den beiden Dichtflächen 28,50 positioniert bleibt und nicht nach radial außen ausweicht. Ein Ausweichen nach radial innen ist aufgrund des Axialversatzes der ersten Dichtfläche 50 bezüglich der Förderkanal-Stirnfläche 46 grundsätzlich nicht möglich.

Um für das Dichtelement insbesondere für den Zusammenbau des Gebläsegehäuses 36 mit dem Wärmetauschergehäuse 12 eine definierte Positionierung vorzugeben, ist eine Dichtelement-Lagepositionierungsformation 62 vorgesehen. Diese umfasst radial außerhalb der ersten Dichtfläche 28, z.B. als integrale Bestandteile des Wärmetauschergehäuses 12, nach radial außen vorspringende Ansätze 64, an welchen über die erste Dichtfläche 28 auf das Gebläsegehäuse 36 zu hervorstehende Positioniervorsprünge 66 ausgebildet sind. In Zuordnung zu den Ansätzen 64 weist das Dichtelement 60 nach radial außen vorspringende Ansätze 68 mit darin ausgebildeten Positionieröffnungen 70 auf. Durch den Eingriff der Positioniervorsprünge 66 in die Positionieröffnungen 70 wird eine stabile und definierte Positionierung des Dichtelements 60 bezüglich des Wärmetauschergehäuses 12 erlangt. Insbesondere wird dadurch an mehreren, beispielsweise sieben, Umfangspositionen eine Halterung des Dichtelements 60 erreicht.

Das bei dem erfindungsgemäßen Aufbau eines Fahrzeugheizgeräts vorgesehene Dichtelement 60 kann aus vergleichsweise weichem Material, beispielsweise Elastomermaterial, aufgebaut sein. Insbesondere Silikonmaterial und unter der Marke Viton vertriebenes Elastomermaterial sind aufgrund der guten Wärmebeständigkeit dieser Materialien besonders vorteilhaft.

Da bei dem erfindungsgemäßen Aufbau die beiden bezüglich einander abzudichtenden Dichtflächen 28, 50 nicht unter Zwischenlagerung eines auch die Verbindungskraft übertragenden, vergleichsweise harten Dichtelements aneinander anliegen, sondern die Positionierung des Wärmetauschergehäuses 12 bezüglich des Gebläsegehäuses 36 durch die Distanzhaltervorsprünge 32 vorgegeben ist, ist es nicht erforderlich, das Wärmetauschergehäuse 12 einerseits und das Gebläsegehäuse 36 andererseits im Bereich ihrer Dichtflächen 28, 50 mit einer beispielsweise durch spanabhebende Bearbeitung herbeigeführten hohen Präzision zu fertigen. Die aus einem Gießverfahren sich ergebende Fertigungsgenauigkeit ist im Bereich dieser Flächen ausreichend. Fertigungstoleranzen werden durch das vergleichsweise dicke und aus leicht verformbaren Material aufgebaute Dichtelement 60 kompensiert.

Bei dem erfindungsgemäßen Aufbau sind vorteilhafterweise das Gebläsegehäuse 36 und das Wärmetauschergehäuse 12 an drei über den Umfang verteilten Positionen, nämlich im Bereich der Distanzhalter/Befestigungsansätze 30, miteinander fest verbunden. Durch das Bereitstellen von drei Verbindungsbereichen in Verbindung mit einem leicht verformbaren und insbesondere das Gebläsegehäuse 36 nicht übermäßig belastenden Dichtungselement 60 ist gewährleistet, dass keine das Gebläsegehäuse 36 verformenden Kräfte entstehen. Dies wiederum stellt sicher, dass das Förderrad 40 mit dem erforderlichen geringem Abstand zu der mit hoher Präzision gefertigten Förderkanal-Stirnfläche 46 positioniert werden kann.

## Patentansprüche

1. Fahrzeugheizgerät, umfassend eine Wärmetauscherbaugruppe (10) und eine Gebläsebaugruppe (38), wobei die Wärmetauscherbaugruppe (10) eine ringartig ausgebildete erste Dichtfläche (28) aufweist und die Gebläsebaugruppe (38) eine ringartig ausgebildete zweite Dichtfläche (50) aufweist, wobei die erste Dichtfläche (28) an einer einen Brennkammerbaugruppenaufnahmeraum (16) umgrenzenden Wandung (14) der Wärmetauscherbaugruppe (10) vorgesehen ist, und wobei die zweite Dichtfläche (50) einen ringartigen Luftförderkanal (42) der Gebläsebaugruppe (38) umgebend vorgesehen ist,
**gekennzeichnet durch**
- eine die erste Dichtfläche (28) der zweiten Dichtfläche (50) in vorbestimmtem Abstand gegenüberliegend positionierende Distanzhalteranordnung (34), wobei die Distanzhalteranordnung (34) an der Wärmetauscherbaugruppe (10) oder/und der Gebläsebaugruppe (38) eine Mehrzahl von über die daran vorgesehene Dichtfläche (28, 50) vorspringenden Distanzhaltervorsprüngen (32) umfasst, und
- ein zwischen der ersten Dichtfläche (28) und der zweiten Dichtfläche (50) eingespanntes, ringartig ausgebildetes Dichtelement (60).

2. Fahrzeugheizgerät nach Anspruch 1, **dadurch gekennzeichnet, dass** die erste Dichtfläche (28) an einer Stirnseite (26) eines Wärmetauschergehäuses (12) der Wärmetauscherbaugruppe (10) vorgesehen ist, und dass die zweite Dichtfläche (50) an einer Stirnseite (45) der Gebläsebaugruppe (38) vorgesehen.

3. Fahrzeugheizgerät Anspruch 1 oder 2, **dadurch gekennzeichnet, dass** die Distanzhalteranordnung (34) nur an der Wärmetauscherbaugruppe (10) eine Mehrzahl von über die daran vorgesehene Dichtfläche (28, 50) vorspringenden Distanzhaltervorsprüngen (32) umfasst.

4. Fahrzeugheizgerät nach einem der Ansprüche 1-3, **dadurch gekennzeichnet, dass** die Distanzhalteranordnung (34) an der Wärmetauscherbaugruppe (10) oder/und der Gebläsebaugruppe (38) drei über die daran vorgesehene Dichtfläche (28, 50) vorspringende Distanzhaltervorsprünge (32) umfasst.

5. Fahrzeugheizgerät nach einem der Ansprüche 1-4, **dadurch gekennzeichnet, dass** im Bereich wenigstens eines, vorzugsweise jedes Distanzhaltervorsprungs (32) eine Befestigungsorganeingriffsöffnung (54) zum Eingriff eines die Gebläsebaugruppe (38) an der Wärmetauscherbaugruppe (10) festlegenden Befestigungsorgans (58) vorgesehen ist.

6. Fahrzeugheizgerät nach einem der Ansprüche 1-5, **dadurch gekennzeichnet, dass** die Gebläsebaugruppe (38) eine die zweite Dichtfläche (50) und für jeden Distanzhaltervorsprung (32) eine Anlagefläche (52) bereitstellende Dicht/Anlage-Stirnfläche (48) aufweist.

7. Fahrzeugheizgerät nach einem der Ansprüche 1-6, **dadurch gekennzeichnet, dass** an der Wärmetauscherbaugruppe (10) oder/und der Gebläsebaugruppe (38) eine Dichtelement-Lagepositionierungsformation (62) vorgesehen ist.

8. Fahrzeugheizgerät nach Anspruch 7, **dadurch gekennzeichnet, dass** die Dichtelement-Lagepositionierungsformation (62) an der Wärmetauscherbaugruppe (10) oder/und der Gebläsebaugruppe (38), vorzugsweise nur der Wärmetauscherbaugruppe (10), wenigstens einen über die daran vorgesehene Dichtfläche (28, 50) vorspringenden Positioniervorsprung (66) zum Eingriff in eine Positionieröffnung (70) des Dichtelements (60) umfasst.

9. Fahrzeugheizgerät nach Anspruch 8, **dadurch gekennzeichnet, dass** eine Vorsprungslänge der Distanzhaltervorsprünge (32) kleiner ist, als eine Vorsprungslänge des wenigstens einen Positioniervorsprungs (66).

10. Fahrzeugheizgerät nach einem der Ansprüche 1-9, **dadurch gekennzeichnet, dass** der Luftförderkanal (42) an einer zur zweiten Dichtfläche (50) axial versetzten Förderkanal-Stirnfläche (46) der Gebläsebaugruppe (38) in Richtung einer Drehachse (D) eines dem Förderkanal (42) axial gegenüberliegenden Förderrads (40) offen ist.

## Claims

1. Vehicle heating device, comprising a heat exchanger assembly unit (10) and a blower assembly unit (38), wherein the heat exchanger assembly unit (10) has a first sealing surface (28) adapted ring-shaped and the blower assembly unit (38) has a second sealing surface (50) adapted ring-shaped, wherein the first sealing surface (28) is provided at a wall (14) of the heat exchanger assembly unit (10), enclosing a combustion chamber assembly unit mounting space (16), and wherein the second sealing surface (50) is provided such that it encloses a ring-shaped air delivery channel (42) of the blower assembly unit (38),
**characterized by**
- a spacer arrangement (34) positioning the first sealing surface (28) in a predetermined distance opposed to the second sealing surface (50), wherein the spacer arrangement (34) comprises at the heat exchanger assembly unit (10) or/and at the blower assembly unit (38), a plurality of spacer projections (32) projecting over the sealing surface (28, 50) provided thereon, and
- by a sealing element (60) clamped between the first sealing surface (28) and the second sealing surface (50) and adapted ring-shaped.

2. Vehicle heating device in accordance with claim 1, **characterized in that** the first sealing surface (28) is provided on an end face (26) of a heat exchanger housing (12) of the heat exchanger assembly unit (10), and that the second sealing surface (50) is provided on an end face (45) of the blower assembly unit (38).

3. Vehicle heating device in accordance with claim 1 or 2, **characterized in that** the spacer arrangement (34) comprises at the heat exchanger assembly unit (10) only, a plurality of spacer projections (32) projecting over the sealing surface (28, 50) provided thereon.

4. Vehicle heating device in accordance with claims 1-3, **characterized in that** the spacer arrangement (34) comprises at the heat exchanger assembly unit (10) or/and at the blower assembly unit, three spacer projections (32) projecting over the sealing surface (28, 50) provided thereon.

5. Vehicle heating device in accordance with claims 1-4, **characterized in that** a fastening member meshing opening (54) is provided in the area of at least one and preferably each spacer projection (32) for meshing with a fastening member (58) fixing the blower assembly unit (38) at the heat exchanger assembly unit (10).

6. Vehicle heating device in accordance with one of claims 1-5, **characterized in that** the blower assembly unit (38) has a sealing/contact end face (48) providing the second sealing surface (50) and a contact surface (52) for each spacer projection (32).

7. Vehicle heating device in accordance with one of the claims 1-6, **characterized in that** a sealing element positioning formation (62) is provided at the heat exchanger assembly unit (10) or/and at the blower assembly unit (38).

8. Vehicle heating device in accordance with claim 7, **characterized in that** the sealing element positioning formation (62) comprises at the heat exchanger assembly unit (10) or/and at the blower assembly unit (38), preferably at the heat exchanger assembly unit (10) only, at least one positioning projection (66) projecting over the sealing surface (28, 50) provided thereon for meshing with a positioning opening (70) of the sealing element (60).

9. Vehicle heating device in accordance with claim 8, **characterized in that** a projection length of the spacer projections (32) is shorter than a projection length of the at least one positioning projection (66).

10. Vehicle heating device in accordance with one of claims 1-9, **characterized in that** the air delivery channel (42) is open on a delivery channel end face (46) of the blower assembly unit (38) axially offset in relation to the second sealing surface (50), in the direction of an axis of rotation (D) of a delivery wheel (40) located axially opposite the delivery channel (42).

## Revendications

1. Dispositif de chauffage de véhicule, comprenant un module d'échangeur de chaleur (10) et un module de ventilateur (38), dans lequel le module d'échangeur de chaleur (10) a une première surface d'étanchéité (28) adaptée en forme d'anneau et le module de ventilateur (38) a une deuxième surface d'étanchéité (50) adaptée en forme d'anneau, dans lequel la première surface d'étanchéité (28) est prévue sur une paroi (14) du module d'échangeur de chaleur (10), renfermant un espace de montage de module de chambre de combustion (16), et dans lequel la deuxième surface d'étanchéité (50) est prévue de telle sorte qu'elle enferme un canal d'alimentation d'air (42) de forme annulaire du module de ventilateur (38),
**caractérisé par**
- un dispositif d'espacement (34) positionnant la première surface d'étanchéité (28) à une distance prédéterminée en face de la deuxième surface d'étanchéité (50), dans lequel le dispositif d'espacement (34) comprend, au niveau du module d'échangeur de chaleur (10) et/ou du module de ventilateur (38), une pluralité de saillies d'espacement (32) faisant saillie sur la surface d'étanchéité (28, 50) prévue sur celle-ci, et
- par un élément d'étanchéité (60) serré entre la première surface d'étanchéité (28) et la deuxième surface d'étanchéité (50) et adapté en forme d'anneau.

2. Dispositif de chauffage de véhicule selon la revendication 1, **caractérisé en ce que** la première surface d'étanchéité (28) est prévue sur une face frontale (26) d'un boîtier d'échangeur de chaleur (12) du module d'échangeur de chaleur (10), et **en ce que** la deuxième surface d'étanchéité (50) est prévue sur une face frontale (45) du module de ventilateur (38).

3. Dispositif de chauffage de véhicule selon la revendication 1 ou 2, **caractérisé en ce que** l'agencement d'espacement (34) comprend, uniquement au niveau du module d'échangeur de chaleur (10), une pluralité de saillies d'espacement (32) faisant saillie sur la surface d'étanchéité (28, 50) prévue sur celle-ci.

4. Dispositif de chauffage de véhicule selon les revendications 1-3, **caractérisé en ce que** l'agencement d'espacement (34) comprend, sur le module d'échangeur de chaleur (10) ou/et sur le module de ventilateur, trois saillies d'espacement (32) faisant saillie sur la surface d'étanchéité (28, 50) prévue sur celle-ci.

5. Dispositif de chauffage de véhicule selon les revendications 1 à 4, **caractérisé en ce qu'**une ouverture d'engrènement d'un élément de fixation (54) est prévue dans la zone d'au moins une et de préférence de chaque saillie d'espacement (32) pour l'engrènement avec un élément de fixation (58) fixant l'unité de ventilateur (38) au module d'échangeur de chaleur (10).

6. Dispositif de chauffage de véhicule selon l'une des revendications 1 à 5, **caractérisé en ce que** l'unité de ventilateur (38) présente une face d'extrémité d'étanchéité/de contact (48) prévoyant la deuxième surface d'étanchéité (50) et une surface de contact (52) pour chaque saillie d'espacement (32).

7. Dispositif de chauffage de véhicule selon l'une des revendications 1-6, **caractérisé en ce qu'**une formation de positionnement d'élément d'étanchéité (62) est prévue sur le module d'échangeur de chaleur (10) et/ou sur le module de ventilateur (38).

8. Dispositif de chauffage de véhicule selon la revendication 7, **caractérisé en ce que** la formation de positionnement d'élément d'étanchéité (62) comprend, sur le module d'échangeur de chaleur (10) et/ou sur le module de ventilateur (38), de préférence uniquement sur le module d'échangeur de chaleur (10), au moins une saillie de positionnement (66) faisant saillie sur la surface d'étanchéité (28, 50) prévue sur celle-ci pour s'engrener avec une ouverture de positionnement (70) de l'élément d'étanchéité (60).

9. Dispositif de chauffage de véhicule selon la revendication 8, **caractérisé en ce qu'**une longueur de projection des saillies d'espacement (32) est plus courte qu'une longueur de projection de ladite au moins une saillie de positionnement (66).

10. Dispositif de chauffage de véhicule selon l'une des revendications 1 à 9, **caractérisé en ce que** le canal d'alimentation d'air (42) est ouvert sur une face d'extrémité de canal d'alimentation (46) de l'unité de ventilateur (38) décalée axialement par rapport à la deuxième surface d'étanchéité (50), dans la direction d'un axe de rotation (D) d'une roue d'alimentation (40) située axialement à l'opposé du canal d'alimentation (42).
